# EUROPEAN PATENT SPECIFICATION

(11) **EP 3 537 067 B1**
(45) Date of publication and mention of the grant of the patent: **15.02.2023**
(21) Application number: 19161554.1
(22) Date of filing: 08.03.2019
(51) Int. Cl.: F25B 49/02

(54) **INDOOR APPARATUS IN AIR-CONDITIONING SYSTEM AND METHOD FOR CONTROLLING THE APPARATUS**
INNENRAUMVORRICHTUNG FÜR KLIMATISIERUNGSSYSTEM UND VERFAHREN ZUR STEUERUNG DER VORRICHTUNG
APPAREIL D'INTÉRIEUR DANS UN SYSTÈME DE CLIMATISATION ET PROCÉDÉ DE COMMANDE DE L'APPAREIL

(30) Priority: 09.03.2018 KR 20180027804
(43) Date of publication of application: 11.09.2019
(73) Proprietor: LG Electronics Inc., Seoul 07336 (KR)
(72) Inventor: LEE, Youngjun, 08592 Seoul (KR); KIM, Seung Yup, 08592 Seoul (KR); JEONG, Jaeeun, 08592 Seoul (KR); LEE, Dongsoo, 08592 Seoul (KR)
(74) Representative: Vossius & Partner Patentanwälte Rechtsanwälte mbB

(56) References cited:
- EP-A1- 2 722 616
- EP-A1- 2 963 359
- EP-A2- 1 555 492

## Description

### BACKGROUND

### 1. Technical Field

The present disclosure relates to an indoor apparatus of an air-conditioning system with a reduced noise level and to a method for controlling the apparatus.

### 2. Description of the Related Art

An air-conditioning system controls an indoor temperature via discharging cold air into an indoor space to create a more comfortable indoor environment to humans. Further, the air-conditioning system purifies indoor air to provide a user with fresh indoor air.

In general, the air-conditioning system includes an indoor apparatus installed indoors and having an indoor heat exchanger, and an outdoor apparatus having a compressor and an outdoor heat exchanger. The outdoor apparatus supplies refrigerant to the indoor apparatus. In the air-conditioning system, the indoor apparatus and the outdoor apparatus are individually controlled. The air-conditioning system operates such that power fed to the compressor or the heat exchanger is controlled.

The air-conditioning system may include one or more indoor apparatus connected to a single outdoor apparatus. Specifically, one indoor apparatus may be connected to one outdoor apparatus. Alternatively, a plurality of indoor apparatuses may be connected to one outdoor apparatus. The air-conditioning system having this configuration may supply the refrigerant to the indoor apparatus based on a signal inputted from the user such that the system operates in a cooling or heating mode.

Refrigerant may be compressed by the compressor of the outdoor apparatus. The compressed refrigerant is supplied through a first refrigerant conduit to the indoor apparatus and then flows into the heat-exchanger of the indoor apparatus. Subsequently, the refrigerant is heat-exchanged with indoor air at the heat-exchanger of the indoor apparatus and then is discharged from the heat exchanger to a second refrigerant conduit which is connected to the outdoor apparatus.

EP 2 963 359 A1 relates to an air-conditioning apparatus to be applied to, for example, a multi-air-conditioning apparatus for a building.

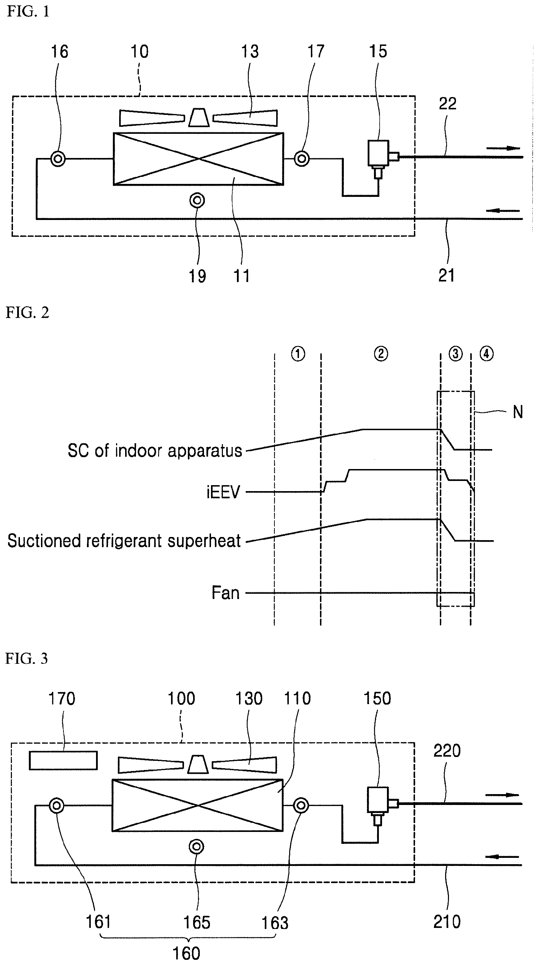

Figure 1 is a schematic illustration of a conventional indoor apparatus of an air-conditioning system.

The conventional indoor apparatus 10 of the air-conditioning system includes a heat-exchanger 11, a fan 13 for flowing air, an expansion valve 15 for expanding refrigerant discharged from the heat-exchanger 11, and temperature sensors 16 and 17 for sensing inlet and outlet temperatures of the indoor heat-exchanger 11 respectively.

A first conduit 21 and a second conduit 22 are connected to an inlet and an outlet of the indoor apparatus 10 respectively. The first conduit 21 supplies condensed refrigerant from the compressor of the outdoor apparatus to the indoor apparatus 10. Meanwhile, the second conduit 22 supplies the refrigerant from the heat-exchanger 11 to the outdoor apparatus.

However, the conventional indoor apparatus 10 of the air-conditioning system relies solely on the expansion valve 15 to perform refrigerant flow-rate control and supercool control. The conventional indoor apparatus 10 of the air-conditioning system does not drive the fan 13 to reduce a refrigerant noise level during a non-operation or heating operation.

Figure 2 is a graph of a supercool (SC), an opening-degree of an expansion valve, a suctioned refrigerant superheat, and an operation of a fan in multiple durations in a conventional indoor apparatus of an air-conditioning system.

As shown in Figure 2, in a duration ①, the expansion valve (iEEV) is closed and, thus, liquid-back occurs. At this time, the expansion valve (iEEV) maintains a reference opening degree (e.g., 80 pls). In a duration (2), due to the liquid-back, supercool (SC) increases. In this duration, the expansion valve (iEEV) starts to open. In a duration (3), the liquid-back is eliminated due to the opening of the expansion valve (iEEV). In this duration, the supercool (SC) is lowered, which causes noise. A duration ④ is a stabilization duration in which the refrigerant noise level is lowered.

However, the conventional indoor apparatus of the air-conditioning system has a disadvantage in that the noise level is reduced only by controlling an opening degree of the expansion valve without driving the fan.

One prior art approach related to the present disclosure is disclosed in Korean Patent Application Publication No. 10-2004-0090326 (publication date: October 22, 2004; hereinafter, referred to as "Prior Art 1") in which refrigerant flow noise is suppressed in an indoor apparatus. In this patent document, in order to suppress refrigerant flow noise resulting from a pressure difference between conduits at an initial startup of the indoor apparatus, when the cooling operation or the heating operation is selected by the user, a louver of the indoor apparatus is opened and then an indoor fan and an electronic expansion valve simultaneously work. In this approach, the refrigerant flow noise caused by the pressure difference between the conduits at a time of opening of the electronic expansion valve is mixed into air flow noised from the indoor fan. Thus, according to Prior Art 1, the refrigerant noise level is not audible due to the fan noise level. Thus, This approach does not reduce the refrigerant noise level.

Another prior art approach related to the present disclosure is disclosed in Korean Patent Application Publication No. 10-2014-0094342 (publication date: July 39, 2014; hereinafter, referred to as "Prior Art 2") providing an air-conditioning system and its control method. However, the method for controlling the air-conditioning system disclosed in Prior Art 2 includes measuring a noise level of the outdoor apparatus and reducing the noise level. Thus, this approach may not be applied to reduce the noise level of the indoor apparatus.

Still another prior art approach related to the present disclosure is disclosed in Korean Patent Application Publication No. 10-1991-0003327 (publication date: February 27, 1991; hereinafter, referred to as "Prior Art 3") providing a device for removal of noise from an outdoor unit in an air-conditioning system. In the device in Prior Art 3, the noise level of the outdoor unit of the air conditioner may be controlled using a noise level sensor for detecting the noise level of the outdoor unit. Thus, this approach may not be applied to reduce the noise level of the indoor apparatus.

Therefore, it is necessary to develop a device and method that may reduce a noise level of the indoor apparatus of the air-conditioning system.

### DISCLOSURE

### 1. Technical Purposes

One purpose of the present disclosure is to provide an indoor apparatus for an air-conditioning system in which determination of supercool and suctioned refrigerant superheat in the indoor apparatus is made and then a refrigerant state in the indoor apparatus is changed based on the determination such that the change reduces a noise level of the indoor apparatus.

Another purpose of the present disclosure is to provide an indoor apparatus for an air-conditioning system in which the noise level of the indoor apparatus is measured, and, then, an opening degree of an expansion valve is controlled and/or a fan is activated or deactivated based on the noise level, thereby reducing the noise level of the indoor apparatus.

Still another purpose of the present disclosure is to provide a method for controlling an indoor apparatus for an air-conditioning system in which determination of supercool and suctioned refrigerant superheat in the indoor apparatus is made and then a refrigerant state in the indoor apparatus is changed based on the determination such that the change reduces a noise level of the indoor apparatus.

### 2. Technical Solutions

A first aspect of the present invention provides an indoor apparatus for an air-conditioning system according to claim 1. A further aspect of the present invention provides a method for controlling the indoor apparatus according to claim 6. Further preferred embodiments of the invention are the subject of the dependent claims.

### 3. Technical Effects

In accordance with the present disclosure, determination of supercool and suctioned refrigerant superheat in the indoor apparatus is made and then a refrigerant state in the indoor apparatus is changed based on the determination such that the change reduces a noise level of the indoor apparatus. More specifically, the indoor apparatus determines the supercool (SC) and the suctioned refrigerant superheat, and then activates the fan at a predetermined rotational speed, for example, at 400 rpm to change the refrigerant state, before opening the expansion valve of the indoor apparatus. This may reduce the noise level of the indoor apparatus.

Further, in accordance with the present disclosure, the noise level of the indoor apparatus is measured, and, then, an opening degree of an expansion valve is controlled and/or a fan is activated or deactivated based on the noise level, thereby reducing the noise level of the indoor apparatus. More specifically, when the noise of the indoor apparatus is determined as the refrigerant noise, the opening degree of the expansion valve is adjusted or a blow rate of the fan is adjusted. As a result, there is an advantageous effect that the noise level may be actively reduced when the indoor apparatus noise occurs.

Further specific effects of the present disclosure as well as the effects as described above will be described in conduction with illustrations of specific details for carrying out the invention.

### BRIEF DESCRIPTION OF DRAWINGS

Figure 1 is a schematic illustration of a conventional indoor apparatus of an air-conditioning system.
Figure 2 is a graph of a supercool (SC), an opening-degree of an expansion valve, a suctioned refrigerant superheat, and an operation of a fan in multiple durations in a conventional indoor apparatus of an air-conditioning system.
Figure 3 is a schematic diagram of an indoor apparatus of an air-conditioning system according to an embodiment of the present disclosure.
Figure 4 is a simplified block diagram of an indoor apparatus of an air-conditioning system according to an embodiment of the present disclosure.
Figure 5 is a graph of a supercool (SC), an opening degree of an expansion valve, a superheat of an input refrigerant, and an operation of a fan in multiple durations according to one embodiment of the present disclosure.
Figure 6 is a flowchart of a method for controlling an indoor apparatus of an air-conditioning system according to the embodiment of the present disclosure.
Figure 7 is a graph of a relationship between an opening-degree of an expansion valve, a suctioned refrigerant superheat, a noise level and a supercool in a working cycle of an indoor apparatus of a conventional air-conditioning system.
Figure 8 is a graph of a relationship between an operation of a fan, opening or closing of an expansion valve, a suctioned refrigerant superheat, a noise level and a supercool (SC) in a working cycle of an indoor apparatus of an air-conditioning system according to the embodiment of the present disclosure.

### DETAILED DESCRIPTION

The above objects, features and advantages will become apparent from the detailed description with reference to the accompanying drawings. Embodiments are described in sufficient detail to enable those skilled in the art in the art to easily practice the technical idea of the present disclosure. Hereinafter, embodiments of the present invention will be described in detail with reference to the accompanying drawings. Throughout the drawings, like reference numerals refer to like elements.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entire list of elements and may not modify the individual elements of the list.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

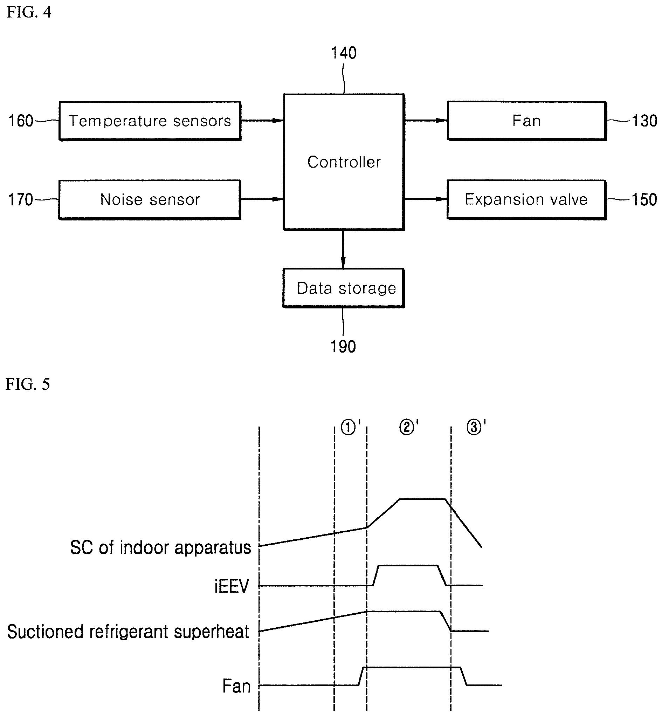

Figure 3 is a schematic diagram of an indoor apparatus of an air-conditioning system according to an embodiment of the present disclosure. Figure 4 is a simplified block diagram of an indoor apparatus of an air-conditioning system according to an embodiment of the present disclosure.

As shown in FIG. 3 and FIG. 4, an indoor apparatus 100 of an air-conditioning system according to an embodiment of the present disclosure includes a heat exchanger 110, a fan 130, an expansion valve 150, temperature sensors 160, a noise sensor 170, and a controller 140.

The air-conditioning system may control an indoor temperature to create a comfortable indoor environment and may purify indoor air to provide a user with fresh indoor air.

The air-conditioning system includes an indoor apparatus 100 (see FIG. 3) installed indoors and an outdoor apparatus (not shown) including a compressor (not shown) for supplying refrigerant to the indoor apparatus 100.

In one example, the air-conditioning system may include one or more indoor apparatus connected to a single outdoor apparatus.

Specifically, one indoor apparatus may be connected to one outdoor apparatus. Alternatively, a plurality of indoor apparatuses may be connected to one outdoor apparatus.

The air-conditioning system having this configuration may supply the refrigerant to the indoor apparatus based on a signal inputted from the user such that the system operates in a cooling or heating mode.

The refrigerant may be compressed by the compressor of the outdoor apparatus. The compressed refrigerant is supplied through a first refrigerant conduit 210 to the indoor apparatus 100 and then flows into the heat-exchanger 110 of the indoor apparatus 100.

Subsequently, the refrigerant is heat-exchanged with indoor air at the heat-exchanger 110 of the indoor apparatus 100 and then is discharged from the exchanger 110 to a second refrigerant conduit 220 which is connected to the outdoor apparatus.

Via the heat exchange with the compressed refrigerant and indoor air at the heat-exchanger 110, the indoor apparatus 100 may allow the indoor air to be cooled down.

Details of the indoor apparatus 100 of the air-conditioning system according to an embodiment of the present disclosure will be described with reference to FIGS. 3 and 4.

The heat-exchanger 110 acts to exchange heat between the refrigerant and the indoor air.

The fan 130 is a device that rotates to force air to flow to the heat-exchanger 110 where the refrigerant is introduced and discharged. Preferably, the fan 130 may be configured to be capable of adjusting a rotating speed, i.e., rpm thereof.

The expansion valve 150 serves to expand the refrigerant discharged from the heat-exchanger 110.

The temperature sensors 160 include a first temperature sensor 161, a second temperature sensor 163, and a third temperature sensor 163.

The first temperature sensor 161 detects a temperature of the refrigerant to flow into the heat-exchanger 110 of the indoor apparatus 100. That is, the first temperature sensor 161 detects the temperature of the refrigerant which flowed out of the outdoor apparatus and will flow into the heat-exchanger 1100 of the indoor apparatus 100.

More specifically, the first temperature sensor 161 may be installed on the first conduit that supplies the refrigerant to the heat-exchanger 110.

In one example, the first temperature sensor 161 may be located close to an inlet of the heat-exchanger 110. Accordingly, the first temperature sensor 161 may more accurately detect the temperature of the refrigerant to be fed into the heat-exchanger 110.

The second temperature sensor 163 detects a temperature of the refrigerant which has been discharged from the heat-exchanger 110. That is, the second temperature sensor 163 detects the temperature of the refrigerant which flowed out of the heat-exchanger 110 and will flow into the compressor of the outdoor apparatus.

More specifically, the second temperature sensor 163 may be installed on the second conduit to receive the refrigerant from the heat-exchanger 110.

In one example, the second temperature sensor 163 may be located close to an outlet of the heat-exchanger 110. Accordingly, the second temperature sensor 163 may more accurately detect the temperature of the refrigerant to be fed from the heat-exchanger 110 through the expansion valve 150 to the compressor of the outdoor apparatus.

Then, the first and second temperature sensors 163 may transmit the measured temperatures to the controller 140. Then, the controller 140 may calculate a suctioned refrigerant superheat based on a temperature difference between the temperatures from the first and second temperature sensors 163.

In this connection, the expansion valve 150 is installed on the second conduit receiving the refrigerant from the heat-exchanger 110 and discharging the refrigerant toward the outdoor apparatus. The expansion valve 150 may be installed downstream of the second temperature sensor 163 and may be received in a housing of the indoor apparatus 100.

In one example, the temperature sensors 160 may further include the third temperature sensor 165.

The third temperature sensor 165 detects a temperature of air inside the indoor apparatus 100.

In one example, the third temperature sensor 165 may be installed adjacent to the conduit to supply the refrigerant to the heat-exchanger 110, and adjacent to the heat-exchanger 110. More specifically, the third temperature sensor 165 may be installed in an empty space in the housing of the indoor apparatus 100 such that the heat exchanger 110 is interposed between the fan 30 and the third temperature sensor 165.

Further, the temperature sensors 160 may further include a fourth temperature sensor (not shown) for detecting a temperature of air extracted from the indoor apparatus 100. The fourth sensor may be installed near the fan 130 and on an outer face of the housing of the indoor apparatus 100 to play a role of estimating a load of the indoor apparatus 100.

The controller 140 (see Figure 4) controls an operation of the fan 130 and control opening and closing of the expansion valve 150.

Specifically, the controller 140 (see FIG. 4) may receive and use temperature information of the refrigerant as measured by the temperature sensors 160 (for example, the first temperature of the refrigerant as measured by the first temperature sensor 161, and the second temperature of the refrigerant as measured by the second temperature sensor 162) to calculate the suctioned refrigerant superheat (see Figure 5).

The controller 140 may control an operation of the fan 130 and/or opening and closing operations of the expansion valve 150 based on the calculated superheat to reduce the noise level of the indoor apparatus 100.

In the conventional indoor apparatus, the fan was not driven to reduce the refrigerant noise during a heating operation. To the contrary, the indoor apparatus of the air-conditioning system according to an embodiment of the present disclosure may drive the fan at a rotational speed at a very low level as not perceived by the user to change the refrigerant state inside the heat-exchanger (that is, liquefy the refrigerant), thereby to reduce the refrigerant noise.

In one example, the indoor apparatus 100 of the air-conditioning system according to an embodiment of the present disclosure may further include a noise sensor 170 and data storage 190 (see FIG. 4).

The noise sensor 170 may be installed inside or outside the indoor apparatus 100 to measure abnormal noise or refrigerant noise level generated from the indoor apparatus 100. Then, the noise data measured by the noise sensor 170 may be recorded and stored in the data storage 190 (see FIG. 4).

In this connection, the controller 140 may change an operation setting so as to drive the fan 130 and/or to control opening and closing operations of the expansion valve 150 based on the noise data measured by the noise sensor 170, thereby to reduce the noise level of the indoor apparatus 100.

The controller 140 (see FIG. 4) may calculate a reference noise level using the noise data stored in the data storage 190 (see FIG. 4). The reference noise level may be used to control the operation of the fan 130 and/or to control the opening and closing of the expansion valve 150.

In one example, the noise sensor 170 may further amplify and filter an analog noise signal, and convert the same to a digital signal. However, the amplification, filtering and conversion may be optional in the present disclosure.

Figure 5 is a graph of a supercool (SC), an open or close state of an expansion valve, a superheat of an input refrigerant, and an operation of a fan in multiple durations according to one embodiment of the present disclosure.

In a duration ①', the expansion valve (iEEV) is in a closed state. For example, 80 pls is maintained. Liquid-back occurs. Due to the liquid-back, SC increases and, further, the suctioned refrigerant superheat increases

Next, in a duration (2)', SC increases, and the fan is turned on or activated, and the expansion valve (iEEV) is opened.

Subsequently, in a duration ③', the supercool (SC) starts to decrease, and, at the same time, the expansion valve (iEEV) is closed. Then, when the suctioned superheat reaches the lowest point, the fan is deactivated or turned off such that the operation of the indoor apparatus is stabilized.

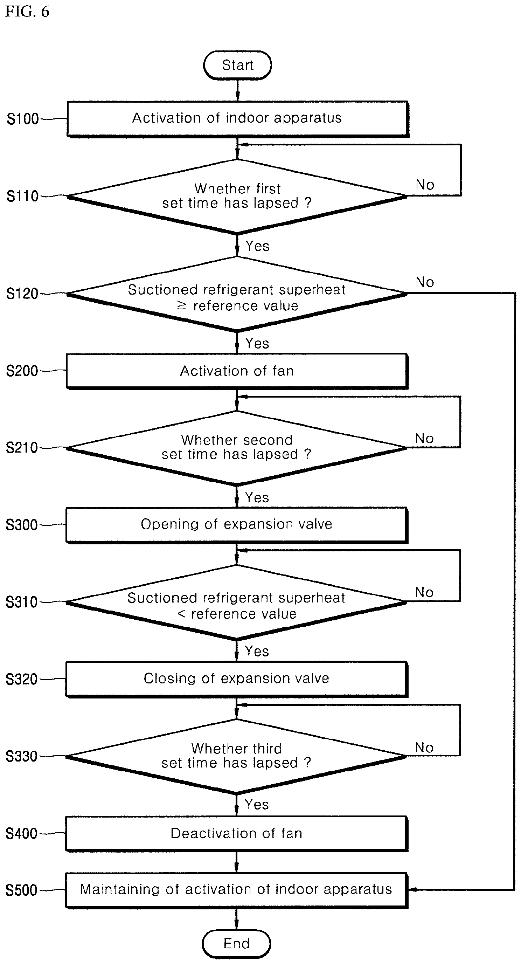

Figure 6 is a flowchart of a method for controlling an indoor apparatus of an air-conditioning system according to the embodiment of the present disclosure.

As shown in FIG. 6, the method for controlling the indoor apparatus of an air-conditioning system may include an indoor apparatus activation operation S100, a first reference superheat value comparison operation S120, a fan activating operation S200, an expansion valve opening operation S300, a second reference superheat value comparison operation S310, an expansion valve closing operation S320, a fan deactivating operation S400, and an indoor apparatus activation maintaining operation S500.

First, the indoor apparatus activation operation S100 may be performed in which operating the compressor allows the refrigerant to be supplied to the indoor apparatus 100 (see FIG. 3) such that the indoor apparatus operates.

Then, when a first set time has elapsed after the compressor is started, the suctioned refrigerant superheat is measured. Then, the first reference superheat value comparison operation S120 may be performed to compare the suctioned refrigerant superheat as measured with a reference superheat value. In this connection, the first set time may be in a range of 4 to 6 minutes. For example, after about 5 minutes has elapsed since the compressor operation, the measured suctioned refrigerant superheat may be compared with the reference superheat value. In this connection, in one example, the reference superheat value may be a sum between 3.5 to 4.5°C and a target suctioned refrigerant superheat as set by the user. For example, the reference superheat value may be a sum between the target suctioned refrigerant superheat and 4°C.

Next, the fan activating operation S200 is performed. When the suctioned refrigerant superheat as measured in the previous reference superheat value comparison operation S120 is equal to or greater than the reference superheat value, the fan 130 (see FIG. 3) is turned on or activated. When the suctioned refrigerant superheat as measured in the reference superheat value comparison operation S120 is smaller than the reference superheat value, the fan 130 (see Figure 3) is turned off or deactivated. The process proceeds to the operation S500 in which the activation of the indoor apparatus is maintained and then terminates.

Thereafter, the expansion valve opening operation S300 is performed. That is, when a certain period of time, that is, a second set time has elapsed since the fan 130 (see Figure 3) was turned on or activated, an opening of the expansion valve 150 (see Figure 3) may be performed. In this connection, the second set time may be set in a range of 9 to 11 seconds. Preferably, when the fan 130 (FIG. 3) is turned on and, then, about 10 seconds have elapsed, the expansion valve 150 (See Figure 3) may be opened.

Subsequently, after the opening of the expansion valve, the second reference superheat value comparison operation S310 and the expansion valve closing operation S320 may be sequentially performed.

After opening the expansion valve 150 (see Figure 3), a suctioned refrigerant superheat is measured again. Then, the second reference superheat value comparison operation S310 is performed to compare the further measured suctioned refrigerant superheat with the reference superheat value. In this connection, when the further suctioned refrigerant superheat is smaller than the reference superheat value, the operation S320 is performed to close the expansion valve 150 (see FIG. 3).

Then, when the expansion valve 150 (see Figure 3) closes and then a third set time has elapsed, the fan deactivating operation S400 is performed to stop the fan operation. In this connection, the third set time may be set in a range of 9 to 11 seconds which is the same range as the second set time as described above. In one example, when about 10 seconds have elapsed since the expansion valve 150 (see Figure 3) was closed, the fan 130 (see Figure 3) may be turned off or deactivated.

Thereafter, when the operation of the indoor apparatus is stabilized, the operation S500 in which the indoor apparatus continues activation in the stabilized state may be performed.

In one example, although not shown separately, after the indoor apparatus activation operation S100, a noise level of the indoor apparatus is measured as necessary, and the measured noise level is stored as noise level data. Thus, the method may further include a noise level reduction operation (not shown) by activating or deactivating the fan 130 (see Figure 3) and/or closing or opening the expansion valve 150 (see Figure 3), based on the noise level data.

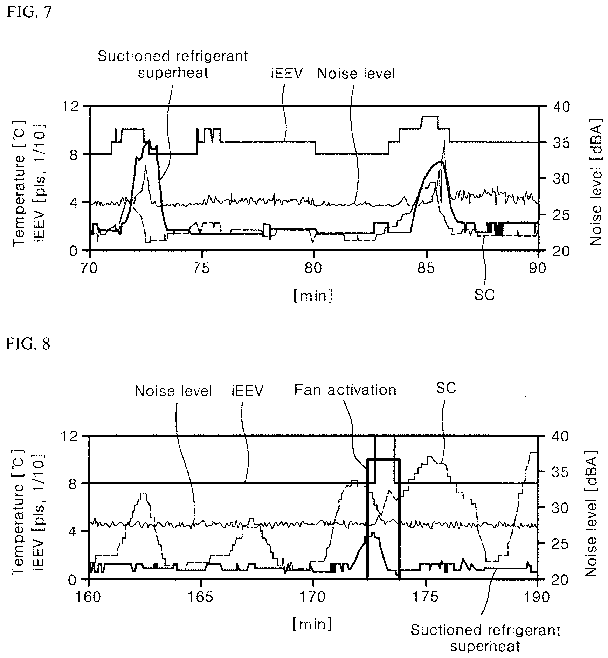

Figure 7 is a graph of a relationship between an opening-degree of an expansion valve, a suctioned refrigerant superheat, a noise level and a supercool in a working cycle of an indoor apparatus of a conventional air-conditioning system. Figure 8 is a graph of a relationship between an operation of a fan, opening or closing of an expansion valve, a suctioned refrigerant superheat, a noise level and a supercool (SC) in a working cycle of an indoor apparatus of an air-conditioning system according to the embodiment of the present disclosure.

The larger the supercool SC, the more likely the refrigerant may be liquefied. In this connection, the liquid refrigerant may be advantageous in reducing the refrigerant noise level due to a high density of the liquid refrigerant and a low flow rate of the liquid refrigerant and lack of bubbles therein.

As shown in Figure 7, the conventional indoor apparatus of the air-conditioning system controls the supercool SC only using the expansion valve (iEEV). In this case, because the expansion valve (iEEV) is responsible for controlling the flow rate of the refrigerant, the expansion valve (iEEV) may not fully act to reduce the noise level.

With reference to FIG. 8, the indoor apparatus of the air-conditioning system according to an embodiment of the present disclosure determines the supercool (SC) and the suctioned refrigerant superheat, and then activates the fan at a predetermined rotational speed, for example, at 400 rpm to change the refrigerant state, before opening the expansion valve of the indoor apparatus. This may reduce the noise level of the indoor apparatus.

The controller 140 may be implemented in a software, hardware, and a combination thereof. Thus, the operations of the method as described in connection with the embodiments disclosed herein may be executed by the controller 140. The storage 190 may include various types of volatile or non-volatile storage media. For example, the memory 1300 may include a ROM (Read Only Memory) and a RAM (Random Access Memory).

As described above, according to the configuration and operation of the indoor apparatus of the air-conditioning system in accordance with the present disclosure, there is an advantageous technical effect that the noise level of the indoor apparatus can be reduced via the determination of the supercool and the suctioned refrigerant superheat in the indoor apparatus and then changing the refrigerant state in the indoor apparatus based on the determination.

Furthermore, when the noise of the indoor apparatus is determined as the refrigerant noise, the opening degree of the expansion valve is adjusted or a blow rate of the fan is adjusted. As a result, there is an advantageous effect that the noise level may be actively reduced when the indoor apparatus noise occurs.

Although the present disclosure has been described with reference to the embodiments and the drawings illustrating the present disclosure, the present disclosure is not limited to the embodiments and drawings as disclosed in the present specification. It will be apparent that various modifications may be made by those skilled in the art within the scope of the present disclosure. In addition, it should be recognized that some effects of the present disclosure are not explicitly set forth but are implicitly predicted.

## Claims

1. An indoor apparatus (100) in an air-conditioning system, wherein the indoor apparatus (100) includes:
a heat-exchanger (110) for exchanging heat between refrigerant and indoor air;
a fan (130) rotating to provide air to flow to the heat-exchanger (110); and
an expansion valve (150) for expanding refrigerant discharged from the heat-exchanger (110),
the indoor apparatus (100) being **characterized in that** the indoor apparatus (100) further includes:
a first temperature sensor (161) disposed on a first conduit (210) for supplying refrigerant to the heat-exchanger (110), wherein the first temperature sensor (161) detects a first temperature of refrigerant to be fed into the heat-exchanger (110);
a second temperature sensor (163) disposed on a second conduit (220) for receiving refrigerant from the heat-exchanger (110), wherein the second temperature sensor (163) detects a second temperature of refrigerant discharged from the heat-exchanger (110); and
a controller (140) configured to:
calculate a superheat based on a difference between the first and second temperatures; **characterised in that** the controller is further configured to control activation or deactivation of the fan (130) and/or opening or closing of the expansion valve (150) based on the calculated superheat to reduce a noise level of the indoor apparatus (100),
wherein the indoor apparatus (100) further includes a noise sensor (170) for measuring a noise level of the indoor apparatus (100),
wherein the controller (140) is further configured to control activation or deactivation of the fan (130) and/or opening or closing of the expansion valve (150) based on the noise level measured by the noise sensor (170) to reduce the noise level of the indoor apparatus (100).

2. The indoor apparatus (100) of claim 1, wherein the first temperature sensor (161) is located adjacent to an inlet of the heat-exchanger (110),
wherein the second temperature sensor (163) is located adjacent to an outlet of the heat-exchanger (110).

3. The indoor apparatus (100) of claim 1 or 2, wherein the expansion valve (150) is disposed on the second conduit (220) for receiving refrigerant from the heat-exchanger (110) and discharging refrigerant toward an outdoor apparatus in the air-conditioning system, wherein the expansion valve (150) is disposed downstream of the second temperature sensor (163).

4. The indoor apparatus (100) of any one of claims 1 to 3, wherein the indoor apparatus (100) further includes a third temperature sensor (165) for detecting a third temperature of air inside the indoor apparatus (100),
wherein the third temperature sensor (165) is disposed adjacent to the first conduit (210) such that the heat-exchanger (110) is interposed between the fan (130) and the third temperature sensor (165).

5. The indoor apparatus (100) of any one of claims 1 to 4, wherein the indoor apparatus (100) further includes data storage (190) for recording and storing the noise level measured by the noise sensor (170),
wherein the controller (140) is further configured to calculate a reference noise level based on the noise level measured by the noise sensor (170), wherein the reference noise level is used by the controller (140) to control activation or deactivation of the fan (130) and/or opening or closing of the expansion valve (150).

6. A method for controlling an indoor apparatus (100) in an air-conditioning system according to claim 1, the method being **characterized in that** the method further includes:
(a) receiving, by a heat-exchanger (110) of the indoor apparatus (100), refrigerant, from a compressor of an outdoor apparatus via an activation of the compressor such that the indoor apparatus (100) is activated;
(b) when a first set time has elapsed since the compressor activation, calculating, by a controller (140) of the indoor apparatus (100), a superheat based on a difference between the first and second temperatures measured by the first temperature sensor (161) and the second temperature sensor (163) respectively, and comparing, by the controller (140), the superheat with a reference superheat value;
(c) activating, by the controller (140), a fan (130) of the indoor apparatus (100) when the superheat is equal to or greater than the reference superheat value;
(d) when a second set time has elapsed since the activation of the fan (130), opening, by the controller (140), an expansion valve (150) of the indoor apparatus (100);
(e) after opening the expansion valve (150), calculating, by the controller (140), a further superheat based on a difference between the first and second temperatures measured by the first temperature sensor (161) and the second temperature sensor (163) respectively, and comparing, by the controller (140), the further superheat with the reference superheat value, and, closing, by the controller (140), the expansion valve (150) when the further superheat is smaller than the reference superheat value;
(f) when a third set time has elapsed since the closing of the expansion valve (150), deactivating, by the controller (140), the fan (130); and
(g) maintaining the activation of the indoor apparatus (100),
wherein the method further includes, after (a), measuring, by a noise sensor (170), a noise level of the indoor apparatus (100), and controlling, by the controller (140), activation or deactivation of the fan (130) and/or opening or closing of the expansion valve (150) based on the measured noise level.

7. The method of claim 6, wherein the first set time is in a range of 4 to 6 minutes.

8. The method of claim 6 or 7, wherein each of the second and third set times is in a range of 9 to 11 seconds.

9. The method of any one of claims 6 to 8, wherein the reference superheat value is defined as a sum between a value between 3.5 and 4.5 degrees C and a target superheat.

## Patentansprüche

1. Innenraumvorrichtung (100) in einem Klimatisierungssystem, wobei die Innenraumvorrichtung (100) umfasst:
einen Wärmetauscher (110) zum Austauschen von Wärme zwischen Kältemittel und Innenluft;
einen Ventilator (130), der sich dreht, um derart Luft bereitzustellen, dass sie zu dem Wärmetauscher (110) strömt; und
ein Expansionsventil (150) zum Expandieren von Kältemittel, das von dem Wärmetauscher (110) abgegeben wird,
wobei die Innenraumvorrichtung (100) **dadurch gekennzeichnet, ist, dass** die Innenraumvorrichtung (100) ferner umfasst:
einen ersten Temperatursensor (161), der auf einer ersten Leitung (210) zum Zuführen von Kältemittel an den Wärmetauscher (110) angeordnet ist, wobei der erste Temperatursensor (161) eine erste Temperatur von Kältemittel, das in den Wärmetauscher (110) gespeist werden soll, erfasst;
einen zweiten Temperatursensor (163), der auf einer zweiten Leitung (220) zum Empfangen von Kältemittel von dem Wärmetauscher (110) angeordnet ist, wobei der zweite Temperatursensor (163) eine zweite Temperatur von Kältemittel, das von dem Wärmetauscher (110) abgegeben wird, erfasst; und
eine Steuerung (140), die konfiguriert ist, um:
eine Überhitzung basierend auf einer Differenz zwischen den ersten und zweiten Temperaturen zu berechnen;
**dadurch gekennzeichnet, dass** die Steuerung ferner konfiguriert ist, um die Aktivierung oder Deaktivierung des Ventilators (130) und/oder das Öffnen oder Schließen des Expansionsventils (150) basierend auf der berechneten Überhitzung zu steuern, um einen Geräuschpegel der Innenraumvorrichtung (100) zu verringern,
wobei die Innenraumvorrichtung (100) ferner einen Geräuschsensor (170) zum Messen eines Geräuschpegels der Innenraumvorrichtung (100) umfasst,
wobei die Steuerung (140) ferner konfiguriert ist, um Aktivierung oder Deaktivierung des Ventilators (130) und/oder das Öffnen oder Schließen des Expansionsventils (150) basierend auf dem von dem Geräuschsensor (170) gemessenen Geräuschpegel zu steuern, um den Geräuschpegel der Innenraumvorrichtung (100) zu verringern.

2. Innenraumvorrichtung (100) nach Anspruch 1, wobei der erste Temperatursensor (161) benachbart zu einem Einlass des Wärmetauschers (110) angeordnet ist,
wobei der zweite Temperatursensor (163) benachbart zu einem Auslass des Wärmetauschers (110) angeordnet ist.

3. Innenraumvorrichtung (100) nach Anspruch 1 oder 2, wobei das Expansionsventil (150) auf der zweiten Leitung (220) zum Empfangen von Kältemittel von dem Wärmetauscher (110) und Abgeben von Kältemittel in Richtung einer Außenvorrichtung in dem Klimatisierungssystem angeordnet ist, wobei das Expansionsventil (150) strömungsabwärtig von dem zweiten Temperatursensor (163) angeordnet ist.

4. Innenraumvorrichtung (100) nach einem der Ansprüche 1 bis 3, wobei die Innenraumvorrichtung (100) ferner einen dritten Temperatursensor (165) zum Erfassen einer dritten Temperatur von Luft im Inneren der Innenraumvorrichtung (100) umfasst,
wobei der dritte Temperatursensor (165) benachbart zu der ersten Leitung (210) angeordnet ist, so dass der Wärmetauscher (110) zwischen dem Ventilator (130) und dem dritten Temperatursensor (165) eingefügt ist.

5. Innenraumvorrichtung (100) nach einem der Ansprüche 1 bis 4, wobei die Innenraumvorrichtung (100) ferner einen Datenspeicher (190) zum Aufzeichnen und Speichern des von dem Geräuschsensor (170) gemessenen Geräuschpegels umfasst,
wobei die Steuerung (140) ferner konfiguriert ist, um einen Referenzgeräuschpegel basierend auf dem von dem Geräuschsensor (170) gemessenen Geräuschpegel zu berechnen, wobei der Referenzgeräuschpegel von der Steuerung (140) verwendet wird, um die Aktivierung oder Deaktivierung des Ventilators (130) und/oder das Öffnen oder Schlie-ßen des Expansionsventils (150) zu steuern.

6. Verfahren zur Steuerung einer Innenraumvorrichtung (100) in einem Klimatisierungssystem nach Anspruch 1, wobei das Verfahren **dadurch gekennzeichnet ist, dass** das Verfahren ferner umfasst:
(a) Empfangen von Kältemittel von einem Kompressor einer Außenvorrichtung durch einen Wärmetauscher (110) der Innenraumvorrichtung (100) über eine Aktivierung des Kompressors derart, dass die Innenraumvorrichtung (100) aktiviert wird;
(b) wenn eine erste festgelegte Zeit seit der Kompressoraktivierung vergangen ist, Berechnen einer Überhitzung basierend auf einer Differenz zwischen den ersten und zweiten Temperaturen, die jeweils von dem ersten Temperatursensor (161) und dem zweiten Temperatursensor (163) gemessen werden, durch eine Steuerung (140) der Innenraumvorrichtung (100) und Vergleichen der Überhitzung mit einem Referenzüberhitzungswert durch die Steuerung (140);
(c) Aktivieren eines Ventilators (130) der Innenraumvorrichtung (100) durch die Steuerung (140), wenn die Überhitzung größer oder gleich dem Referenzüberhitzungswert ist;
(d) wenn eine zweite festgelegte Zeit seit der Aktivierung des Ventilators (130) vergangen ist, Öffnen eines Expansionsventils (150) der Innenraumvorrichtung (100) durch die Steuerung (140);
(e) nach dem Öffnen des Expansionsventils Berechnen einer weiteren Überhitzung basierend auf einer Differenz zwischen den ersten und zweiten Temperaturen, die jeweils von dem ersten Temperatursensor (161) und dem zweiten Temperatursensor (163) gemessen werden, durch die Steuerung (140), und Vergleichen der weiteren Überhitzung mit dem Referenzüberhitzungswert durch die Steuerung (140) und Schließen des Expansionsventils (150) durch die Steuerung (140), wenn die weitere Überhitzung kleiner als der Referenzüberhitzungswert ist;
(f) wenn eine dritte festgelegte Zeit seit dem Schließen des Expansionsventils (150) vergangen ist, Deaktivieren des Ventilators (130) durch die Steuerung (140); und
(g) Beibehalten der Aktivierung der Innenraumvorrichtung (100),
wobei das Verfahren ferner nach (a) umfasst: Messen eines Geräuschpegels der Innenraumvorrichtung (100) durch einen Geräuschsensor (170) und Steuern der Aktivierung oder Deaktivierung des Ventilators (130) und/oder des Öffnens oder Schließens des Expansionsventils (150) basierend auf dem gemessenen Geräuschpegel durch die Steuerung (140).

7. Verfahren nach Anspruch 6, wobei die erste festgelegte Zeit in einem Bereich von 4 bis 6 Minuten liegt.

8. Verfahren nach Anspruch 6 oder 7, wobei jede der zweiten und dritten festgelegten Zeiten in einem Bereich von 9 bis 11 Sekunden liegt.

9. Verfahren nach einem der Ansprüche 6 bis 8, wobei der Referenzüberhitzungswert als eine Summe eines Werts zwischen 3,5 und 4,5 Grad C und einer Zielüberhitzung definiert ist.

## Revendications

1. Appareil intérieur (100) dans un système de climatisation, dans lequel l'appareil intérieur (100) comprend :
un échangeur de chaleur (110) pour échanger de la chaleur entre un réfrigérant et de l'air intérieur ;
un ventilateur (130) entraîné en rotation pour amener de l'air à circuler vers l'échangeur de chaleur (110) ; et
un détendeur (150) destiné à détendre le réfrigérant déchargé de l'échangeur de chaleur (110),
l'appareil intérieur (100) étant **caractérisé en ce que** l'appareil intérieur (100) comprend en outre :
un premier capteur de température (161) disposé sur une première conduite (210) d'alimentation en réfrigérant de l'échangeur de chaleur (110), dans lequel le premier capteur de température (161) détecte une première température de réfrigérant à amener dans l'échangeur de chaleur (110) ;
un deuxième capteur de température (163) disposé sur une seconde conduite (220) de réception de réfrigérant provenant de l'échangeur de chaleur (110), dans lequel le deuxième capteur de température (163) détecte une deuxième température de réfrigérant déchargé de l'échangeur de chaleur (110) ; et
un organe de commande (140) configuré pour :
calculer une valeur de surchauffe sur la base d'une différence entre les première et deuxième températures ;
**caractérisé en ce que** l'organe de commande est en outre configuré pour commander une activation ou une désactivation du ventilateur (130) et/ou une ouverture ou une fermeture du détendeur (150) sur la base de la valeur de surchauffe calculée pour réduire un niveau de bruit de l'appareil intérieur (100),
dans lequel l'appareil intérieur (100) comprend en outre un capteur de bruit (170) destiné à mesurer un niveau de bruit de l'appareil intérieur (100),
dans lequel l'organe de commande (140) est en outre configuré pour commander une activation ou une désactivation du ventilateur (130) et/ou une ouverture ou une fermeture du détendeur (150) sur la base du niveau de bruit mesuré par le capteur de bruit (170) de façon à réduire le niveau de bruit de l'appareil intérieur (100).

2. Appareil intérieur (100) selon la revendication 1, dans lequel le premier capteur de température (161) est situé adjacent à un orifice d'entrée de l'échangeur de chaleur (110),
dans lequel le deuxième capteur de température (163) est situé adjacent à un orifice de sortie de l'échangeur de chaleur (110).

3. Appareil intérieur (100) selon la revendication 1 ou la revendication 2, dans lequel le détendeur (150) est disposé sur la seconde conduite (220) destinée à recevoir du réfrigérant de l'échangeur de chaleur (110) et à décharger du réfrigérant vers un appareil extérieur du système de climatisation, dans lequel le détendeur (150) est disposé en aval du deuxième capteur de température (163) .

4. Appareil intérieur (100) selon l'une quelconque des revendications 1 à 3, dans lequel l'appareil intérieur (100) comprend en outre un troisième capteur de température (165) destiné à détecter une troisième température d'air à l'intérieur de l'appareil intérieur (100),
dans lequel le troisième capteur de température (165) est disposé adjacent à la première conduite (210) de sorte que l'échangeur de chaleur (110) est interposé entre le ventilateur (130) et le troisième capteur de température (165) .

5. Appareil intérieur (100) selon l'une quelconque des revendications 1 à 4, dans lequel l'appareil intérieur (100) comprend en outre un organe de mémorisation de données (190) destiné à enregistrer et à mémoriser le niveau de bruit mesuré par le capteur de bruit (170),
dans lequel l'organe de commande (140) est en outre configuré pour calculer un niveau de bruit de référence sur la base du niveau de bruit mesuré par le capteur de bruit (170), dans lequel le niveau de bruit de référence est utilisé par l'organe de commande (140) pour commander une activation ou une désactivation du ventilateur (130) et/ou une ouverture ou une fermeture du détendeur (150).

6. Procédé de commande d'un appareil intérieur (100) dans un système de climatisation selon la revendication 1, le procédé étant **caractérisé en ce que** le procédé comprend en outre les étapes consistant à :
(a) recevoir, par un échangeur de chaleur (110) de l'appareil intérieur (100), du réfrigérant d'un compresseur d'un appareil extérieur par le biais d'une activation du compresseur de façon à activer l'appareil intérieur (100) ;
(b) lorsqu'un premier temps prédéfini s'est écoulé depuis l'activation de compresseur, calculer, par un organe de commande (140) de l'appareil intérieur (100), une valeur de surchauffe sur la base d'une différence entre les première et deuxième températures mesurées respectivement par le premier capteur de température (161) et par le deuxième capteur de température (163), et comparer, par l'organe de commande (140), la valeur de surchauffe à une valeur de surchauffe de référence ;
(c) activer, par l'organe de commande (140), un ventilateur (130) de l'appareil intérieur (100) lorsque la valeur de surchauffe est égale ou supérieure à la valeur de surchauffe de référence ;
(d) lorsqu'un deuxième temps défini s'est écoulé à partir de l'activation du ventilateur (130), ouvrir, par l'organe de commande (140), un détendeur (150) de l'appareil intérieur (100) ;
(e) après l'ouverture du détendeur (150), calculer, par l'organe de commande (140), une valeur de surchauffe supplémentaire sur la base d'une différence entre les première et deuxième températures mesurées respectivement par le premier capteur de température (161) et par le deuxième capteur de température (163), et comparer, par l'organe de commande (140), la valeur de surchauffe supplémentaire à la valeur de surchauffe de référence, et fermer, par l'organe de commande (140), le détendeur (150) lorsque la valeur de surchauffe supplémentaire est inférieure à la valeur de surchauffe de référence ;
(f) lorsqu'un troisième temps défini s'est écoulé depuis la fermeture du détendeur (150), désactiver, par l'organe de commande (140), le ventilateur (130) ; et
(g) maintenir l'activation de l'appareil intérieur (100),
dans lequel le procédé comprend en outre l'étape consistant, après l'étape (a), à mesurer, par un capteur de bruit (170), un niveau de bruit de l'appareil intérieur (100), et à commander, par l'organe de commande (140), une activation ou une désactivation du ventilateur (130) et/ou une ouverture ou une fermeture du détendeur (150) sur la base du niveau de bruit mesuré.

7. Procédé selon la revendication 6, dans lequel le premier temps défini est dans une plage de 4 à 6 minutes.

8. Procédé selon la revendication 6 ou la revendication 7, dans lequel chacun des deuxième et troisième temps définis est dans une plage de 9 à 11 secondes.

9. Procédé selon l'une quelconque des revendications 6 à 8, dans lequel la valeur de surchauffe de référence est définie comme une somme entre une valeur comprise entre 3,5 et 4,5 degrés Celsius et une valeur de surchauffe cible.
